# EUROPÄISCHE PATENTSCHRIFT

(11) **EP 3 486 145 B1**
(45) Veröffentlichungstag und Bekanntmachung des Hinweises auf die Patenterteilung: **19.01.2022**
(21) Anmeldenummer: 17201951.5
(22) Anmeldetag: 15.11.2017
(51) Int. Cl.: B62D 25/00, B62D 29/00

(54) **SYSTEM EINES VERSTÄRKTEN STRUKTURELEMENTES**
SYSTEM OF A REINFORCED STRUCTURAL ELEMENT
SYSTÈME D'ÉLÉMENT DE STRUCTURE RENFORCÉE

(43) Veröffentlichungstag der Anmeldung: 22.05.2019
(73) Patentinhaber: SIKA TECHNOLOGY AG, 6340 Baar (CH)
(72) Erfinder: Belpaire, Vincent, 1180 Uccle (BE); Shehu, Ardi, 3111 Rotselaar (BE)
(74) Vertreter: Sika Patent Attorneys

(56) Entgegenhaltungen:
- EP-A1- 2 019 027
- EP-A1- 2 251 250
- DE-A1-102011 117 951
- DE-A1-102013 114 108
- US-B1- 6 341 467

## Beschreibung

Die vorliegende Erfindung betrifft ein System eines verstärkten Strukturelementes eines Kraftfahrzeuges.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken.

In Fig. la ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs- und/oder Verstärkungselementen 16 abgedichtet bzw. verstärkt.

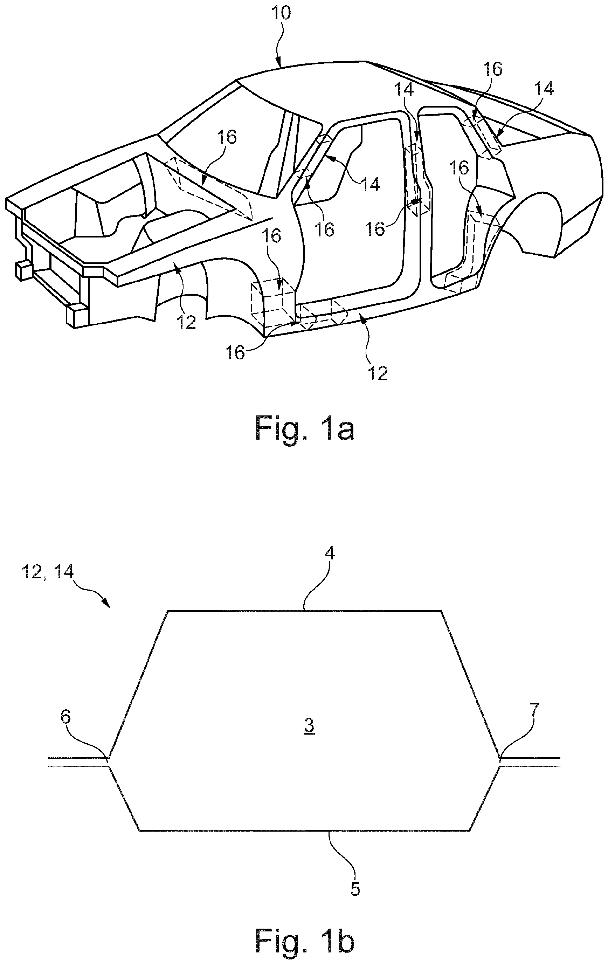

In Fig. 1b ist schematisch ein Querschnitt durch ein Strukturelement 12, 14 dargestellt. Oftmals sind bei solchen Strukturelementen 12, 14 ein erstes Blech 4 und ein zweites Blech 5 an Fügestellen 6, 7 zusammengefügt, wobei die Bleche 4, 5 zwischen den Fügestellen 6, 7 einen Hohlraum 3 ausbilden.

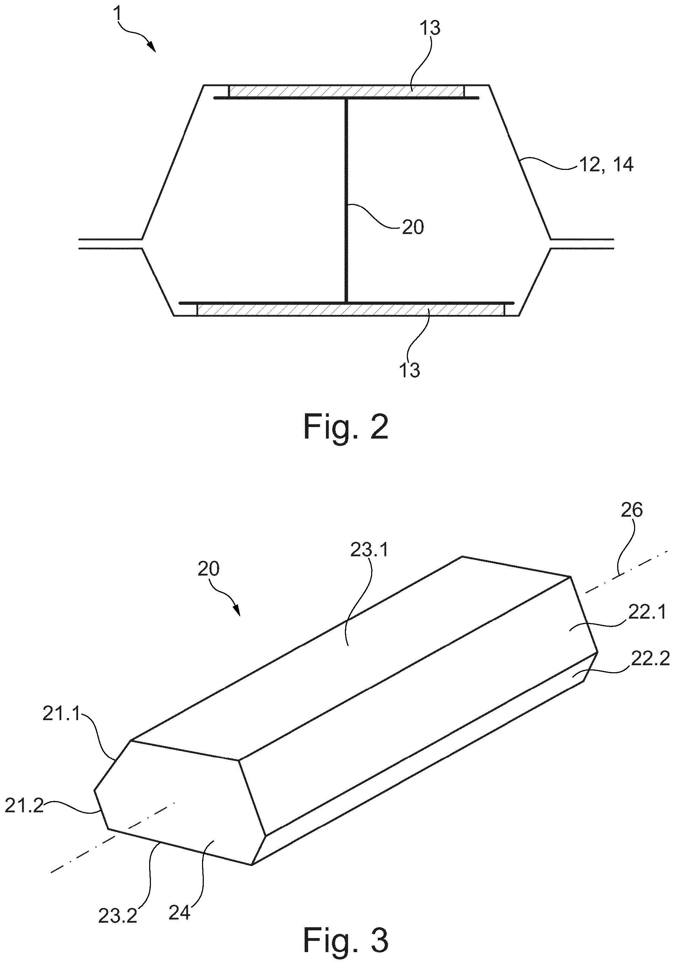

In Fig. 2 ist ein bekanntes System 1 eines verstärkten Strukturelementes 12, 14 dargestellt. Dabei ist ein Verstärkungselement 20 im Hohlraum des Strukturelementes 12, 14 angeordnet und durch Klebstoff 13 mit dem Strukturelement 12, 14 verklebt. Das Verstärkungselement 20 hat zwei sich gegenüberliegende Anbindungsflächen, welche an jeweils ein Blech des Strukturelementes 12, 14 angebunden sind. Nachteilig an solchen bekannten Lösungen ist es, dass durch die begrenzte Anbindungsfläche des Verstärkungselementes 20 zur Anbindung an das Strukturelement 12, 14 das Strukturelement 12, 14 nicht ideal verstärkt werden kann.

Aus EP2251250A1 ist ein verstärktes Strukturelement bekannt, bei welchem Durchflussöffnungen im Träger vorgesehen sind, damit Klebstoff beim Fügen des Systems durch diese Öffnungen auf eine Innenseite des Trägers entweichen kann.

Aus DE102011117951A1 ist ein verstärktes Strukturelement bekannt, bei welchem der Träger einen S-förmigen oder Z-förmigen Querschnitt aufweist.

Aus DE102013114108A1 ist ein verstärktes Strukturelement bekannt, welches in Hybridbauweise ausgeführt ist.

Aus US6341467B1 ist ein verstärktes Strukturelement bekannt, bei welchem der Träger einen I-förmigen Querschnitt aufweist.

Es ist daher eine Aufgabe der vorliegenden Erfindung, ein verbessertes System eines verstärkten Strukturelementes zur Verfügung zu stellen, welches eine höhere mechanische Belastbarkeit aufweist. Insbesondere soll eine verbesserte Anbindung des Verstärkungselementes an das Strukturelement geschaffen werden.

Diese Aufgabe wird gelöst durch ein System eines verstärkten Strukturelementes eines Kraftfahrzeuges, wobei das System umfasst: ein Strukturelement, welches ein erstes Blech und ein zweites Blech umfasst, wobei die Bleche an einer ersten Fügestellung können dadurch zusätzliche Bereiche des Strukturelementes mit dem Verstärkungselement verklebt werden. All dies trägt zu einer höheren mechanischen Belastbarkeit des verstärkten Strukturelementes bei.

Ein Kerngedanke der vorliegenden Erfindung ist es, dass das Verstärkungselement über eine möglichst grosse Fläche mit dem Strukturelement verklebt werden soll, und dass insbesondere verschiedene Bereiche des Strukturelementes mit dem Verstärkungselement verklebt werden sollen, um eine höhere mechanische Belastbarkeit des verstärkten Strukturelementes zu erhalten. Es hat sich gezeigt, dass insbesondere eine Verklebung des Verstärkungselementes mit dem Strukturelement in den Bereichen der Fügestellen sich positiv auf die mechanische Belastbarkeit des Gesamtsystems auswirkt.

In einer beispielhaften Ausführungsform sind die ersten Bereiche der Bleche bei der ersten Fügestelle angeordnet, die dritten Bereiche der Bleche sind bei der zweiten Fügestelle angeordnet, und die zweiten Bereiche der Bleche sind zwischen den ersten Bereichen und den dritten Bereichen angeordnet.

Dabei können einzelne Bereiche fliessend ineinander übergehen oder aber durch Biegungen in den Blechen voneinander abgesetzt sein. Es ist auch möglich, dass nebeneinanderliegende Bereiche der Bleche in ein und derselben Ebene liegen.

Die einzelnen Bereiche können beispielsweise ungefähr gleich bemessen sein, oder aber einzelne Bereiche können grösser oder kleiner ausgestaltet sein als andere Bereiche.

In einer beispielhaften Ausführungsform bildet der erste Bereich des ersten Bleches mit dem dritten Bereich des zweiten Bleches ein Paar sich gegenüberliegender Bereiche, und der zweite Bereich des ersten Bleches bildet mit dem zweiten Bereich des zweiten Bleches ein Paar sich gegenüberliegender Bereiche, und der dritte Bereich des ersten Bleches bildet mit dem ersten Bereich des zweiten Bleches ein Paar sich gegenüberliegender Bereiche.

In einer beispielhaften Ausführungsform umfasst die erste Seitenwand eine erste Teilwand und eine zweite Teilwand, und die zweite Seitenwand umfasst eine erste Teilwand und eine zweite Teilwand, wobei die erste Teilwand und die zweite Teilwand einer Seitenwand jeweils im Wesentlichen in unterschiedlichen Ebenen angeordnet sind.

In einer beispielhaften Weiterbildung ist die erste Seitenwand an einer der Teilwände mit dem ersten Blech verklebt und an einer der Teilwände mit dem zweiten Blech verklebt, wobei die zweite Seitenwand an einer der Teilwände wiederum mit dem ersten Blech verklebt ist und an einer der Teilwände mit dem zweiten Blech verklebt ist.

Das Vorsehen von solchen Teilwänden hat den Vorteil, dass dadurch das Verstärkungselement besser an die Form des Strukturelementes angepasst werden kann, so dass eine möglichst grosse Anbindungsfläche des Verstärkungselementes zur Verklebung mit dem Strukturelement zur Verfügung steht.

In einer beispielhaften Ausführungsform verbindet die Verbindungswand die erste Seitenwand und die zweite Seitenwand derart miteinander, dass die Verbindungswand im Wesentlichen diagonal im Strukturelement angeordnet ist.

Erfindungsgemäß umfasst die Verbindungswand eine erste Teilwand und eine zweite Teilwand, wobei die erste Teilwand und die zweite Teilwand jeweils die erste Seitenwand und die zweite Seitenwand miteinander verbinden.

In einer beispielhaften Ausführungsform ist die erste Seitenwand an einer der Teilwände mit dem ersten Blech verklebt oder an einer der Teilwände mit dem zweiten Blech verklebt, und die zweite Seitenwand ist an einer der Teilwände mit dem ersten Blech verklebt oder an einer der Teilwände mit dem zweiten Blech verklebt, und die erste Teilwand der Verbindungswand ist mit dem ersten Blech verklebt, und die zweite Teilwand der Verbindungswand ist mit dem zweiten Blech verklebt.

Dies hat den Vorteil, dass durch die Verwendung der Verbindungswand als zusätzliche Anbindungsfläche des Verstärkungselementes zur Verklebung mit dem Strukturelement eine Gesamtanbindungsfläche vergrössert werden kann.

In einer beispielhaften Ausführungsform ist das Verstärkungselement mit einem dritten Paar von sich gegenüberliegenden Bereichen der Bleche verklebt.

Dies hat den Vorteil, dass dadurch wiederum eine Anbindungsfläche des Verstärkungselementes zur Verklebung mit dem Strukturelement vergrössert wird.

In einer beispielhaften Ausführungsform ist das Verstärkungselement zumindest teilweise aus faserverstärktem Kunststoff oder aus Kunststoff oder aus Aluminium oder aus Magnesium aufgebaut.

In einer beispielhaften Ausführungsform sind alle Wände des Verstärkungselementes aus demselben Material gebildet.

In einer beispielhaften Ausführungsform hat der Klebstoff eine Expansionsrate von weniger als 500*%* oder weniger als 400*%* oder weniger als 300*%*, oder ist der Klebstoff ein nicht expandierbarer Klebstoff.

Wenig expandierbare oder nicht expandierbare Materialien bieten den Vorteil, dass dadurch der Klebstoff bei der Expansion nicht zu sehr an mechanischer Stabilität verliert. Grundsätzlich wird ein Material mechanisch schwächer, je stärker das Material expandiert wird.

Beispiele für nicht oder wenig expandierbare Klebstoffe sind insbesondere SikaReinforcer^{®}-940 oder SikaPower^{®}-497. Dabei ist SikaReinforcer^{®}-940 ein Beispiel für ein expandierbares Material, wobei SikaPower^{®}-497 ein Beispiel für ein nicht expandierbares Material ist.

Der Ausdruck "nicht expandierbar" bedeutet im Zusammenhang dieser Erfindung, dass ein Material sein Volumen nicht mehr oder weniger als 10*%* verändert bei den für das Material vorgesehenen Prozessschritten. Beispielsweise können nicht expandierbare Klebstoffe bei einer Aushärtung leicht schrumpfen. Eine solche Volumenveränderung bei einem Aushärten wird im Sinne dieser Anmeldung als "nicht expandierbar" betrachtet.

In einer beispielhaften Ausführungsform ist der Klebstoff durch eine Temperatur von mehr als 120° härtbar.

In einer weiteren alternativen Ausführungsform umfasst das System einen ersten Klebstoff und einen zweiten Klebstoff, wobei die Klebstoffe unterschiedliche Eigenschaften, insbesondere hinsichtlich einer Expansion und/oder einer Aushärtung und/oder einer Anbindungsfähigkeit und/oder einer mechanischen Belastbarkeit, haben.

In einer beispielhaften Ausführungsform ist der Klebstoff ein Klebebandklebstoff, ein Formgedächtnisklebstoff, ein einspritzbarer Klebstoff, ein spritzgegossener Klebstoff oder ein aufextrudierter Klebstoff.

In einer beispielhaften Ausführungsform hat der Klebstoff eine Schichtdicke von 0,3 bis 7 mm, oder von 1 bis 6 mm, oder von 2 bis 5 mm.

In einer beispielhaften Ausführungsform umfasst das Verstärkungselement Rippen, welche im Wesentlichen orthogonal zu einer Längsachse des Verstärkungselementes orientiert sind und welche die erste Seitenwand und die zweite Seitenwand miteinander verbinden.

Das Vorsehen solcher Rippen bietet den Vorteil, dass dadurch eine mechanische Belastbarkeit des Verstärkungselementes weiter erhöht werden kann.

Erfindungsgemäß ist die erste Seitenwand im Bereich der ersten Fügestelle durch eine kontinuierliche Schicht von Klebstoff mit dem ersten Blech und mit dem zweiten Blech verklebt.

In einer beispielhaften Ausführungsform ist die zweite Seitenwand im Bereich der zweiten Fügestelle durch eine kontinuierliche Schicht von Klebstoff mit dem ersten Blech und dem zweiten Blech verklebt.

Das Verkleben des Verstärkungselementes mit dem Strukturelement im Bereich der Fügestellen mit einer kontinuierlichen Schicht von Klebstoff bietet den Vorteil, dass dadurch eine mechanische Belastbarkeit des Gesamtsystems weiterhin erhöht werden kann.

Das hier beschriebene Verstärkungselement kann beispielsweise durch ein dreidimensionales Druckverfahren hergestellt werden.

Einzelheiten und Vorteile der Erfindung werden im Folgenden anhand von Ausführungsbeispielen und mit Bezug auf schematische Zeichnungen beschrieben.

Es zeigen:
- Fig. 1a: schematische Darstellung einer Karosserie;
- Fig. 1b: schematische Darstellung eines Querschnittes durch ein Strukturelement;
- Fig. 2: schematische Darstellung eines Systems eines verstärkten Strukturelementes gemäss Stand der Technik;
- Fig. 3: schematische Darstellung eines Verstärkungselementes; und
- Fig. 4a bis 4f: schematische Darstellung eines Systems eines verstärkten Strukturelementes. In Fig. 4e ist eine erfindungsgemäß schematische Darstellung eines Systems eines verstärkten Strukturelementes.

In Fig. 3 ist ein beispielhaftes Verstärkungselement 20 dargestellt. Das Verstärkungselement 20 hat eine Längsachse 26. Seitenwände 21, 22 und die Verbindungswand 23 erstrecken sich dabei in Richtung dieser Längsachse 26. In diesem Ausführungsbeispiel haben sowohl die Seitenwände 21, 22 wie auch die Verbindungswand 23 jeweils eine erste Teilwand 21.1, 22.1, 23.1 und eine zweite Teilwand 21.2, 22.2, 23.2. Dabei verbinden die Verbindungswände 23.1, 23.2 jeweils die Seitenwände 21, 22 miteinander.

Weiterhin hat das hier dargestellte beispielhafte Verstärkungselement 20 eine Vorderund Rückwand 24.

Aus dieser räumlichen Darstellung gemäss Fig. 3 ist ersichtlich, dass das Verstärkungselement 20 eine grosse Anbindungsfläche zur Verklebung mit dem Strukturelement aufweist.

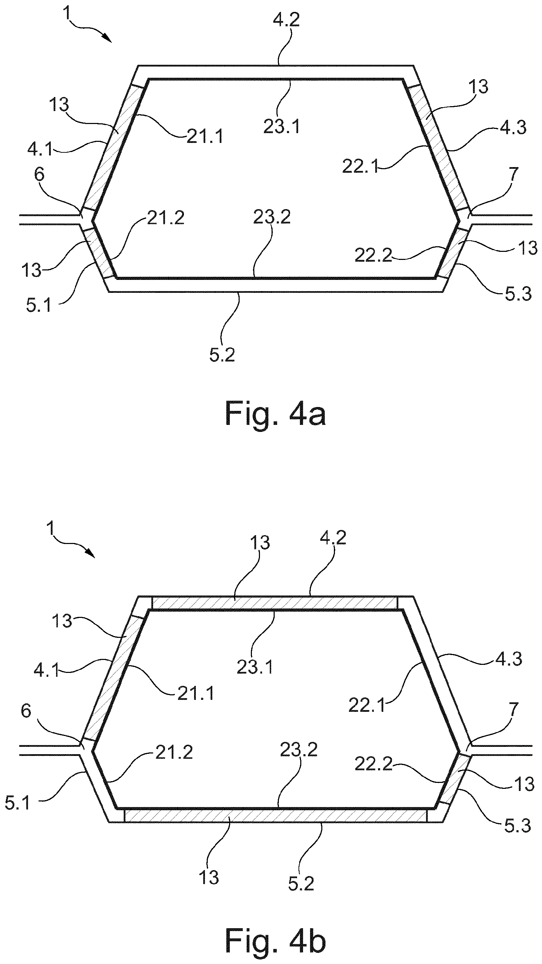

In den Fig. 4a bis 4f sind verschiedene Ausführungsbeispiele von Systemen 1 verstärkter Strukturelemente 12, 14 im Querschnitt dargestellt.

In jedem dieser Ausführungsbeispiele sind zumindest zwei Paare von sich gegenüberliegenden Bereichen 4.1, 4.2, 4.3, 5.1, 5.2, 5.3 der Bleche 4, 5 mit dem Verstärkungselement 20 mit Klebstoff 13 verklebt.

In Fig. 4a hat das Verstärkungselement 20 jeweils Seitenwände 21, 22 und eine Verbindungswand 23, welche in Teilwände untergliedert sind. In diesem Ausführungsbeispiel bildet der erste Bereich 4.1 des ersten Bleches 4 und der dritte Bereich 5.3 des zweiten Bleches 5 ein erstes Paar von sich gegenüberliegenden Bereichen, welches mit dem Verstärkungselement mittels Klebstoff 13 verklebt ist. Weiterhin bildet der erste Bereich 5.1 des zweiten Bleches 5 mit dem dritten Bereich 4.3 des ersten Bleches 4 ein zweites Paar von sich gegenüberliegenden Bereichen, welches ebenfalls mittels Klebstoff 13 mit dem Verstärkungselement 20 verklebt ist. In diesem Ausführungsbeispiel sind die Teilwände 23.1, 23.2 der Verbindungswand 23 nicht mit dem Strukturelement 12, 14 verklebt.

In diesem Ausführungsbeispiel bildet der Klebstoff 13 keine kontinuierliche Schicht im Bereich der Fügestellen 6, 7.

In Fig. 4b ist ein weiteres Beispiel eines Systems 1 eines verstärkten Strukturelementes 12, 14 dargestellt. Im Unterschied zum Ausführungsbeispiel gemäss Fig. 4a sind hier andere Bereiche der Bleche 4, 5 mit dem Verstärkungselement 20 verklebt. Wiederum sind jedoch zwei Paare von sich gegenüberliegenden Bereichen 4.1, 4.2, 5.2, 5.3 der Bleche 4, 5 mit dem Verstärkungselement 20 verklebt.

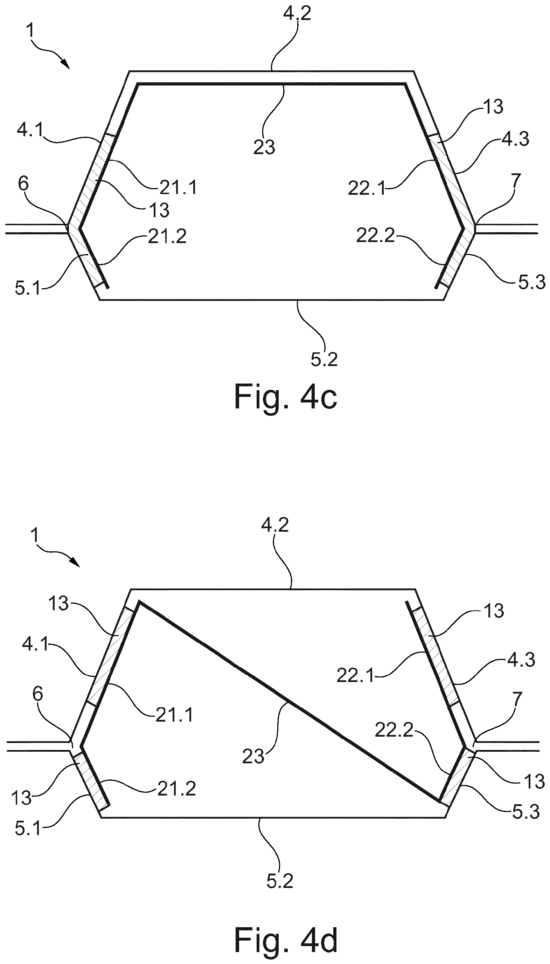

In Fig. 4c ist ein weiteres Ausführungsbeispiel eines Systems 1 eines verstärkten Strukturelementes 12, 14 dargestellt. Im Unterschied zum Ausführungsbeispiel gemäss Fig. 4a ist hier die Verbindungswand 23 nicht in Teilwände untergliedert. Zudem ist hier der Klebstoff 13 jeweils in einer kontinuierlichen Schicht im Bereich der Fügestellen 6, 7 angeordnet, so dass die Seitenwände 21, 22 in diesen Bereichen durchgehend mit den Blechen 4, 5 verklebt sind.

In Fig. 4d ist eine weitere beispielhafte Ausführungsform eines Systems 1 eines verstärkten Strukturelementes 12, 14 dargestellt. Im Unterschied zum Ausführungsbeispiel gemäss Fig. 4a ist hier die Verbindungswand 23 so ausgebildet, dass sie im Wesentlichen diagonal im Strukturelement 12, 14 zu liegen kommt. Wiederum sind zwei Paare von sich gegenüberliegenden Bereichen 4.1, 4.3, 5.1, 5.3 der Bleche 4, 5 mit dem Verstärkungselement 20 mittels Klebstoff 13 verklebt.

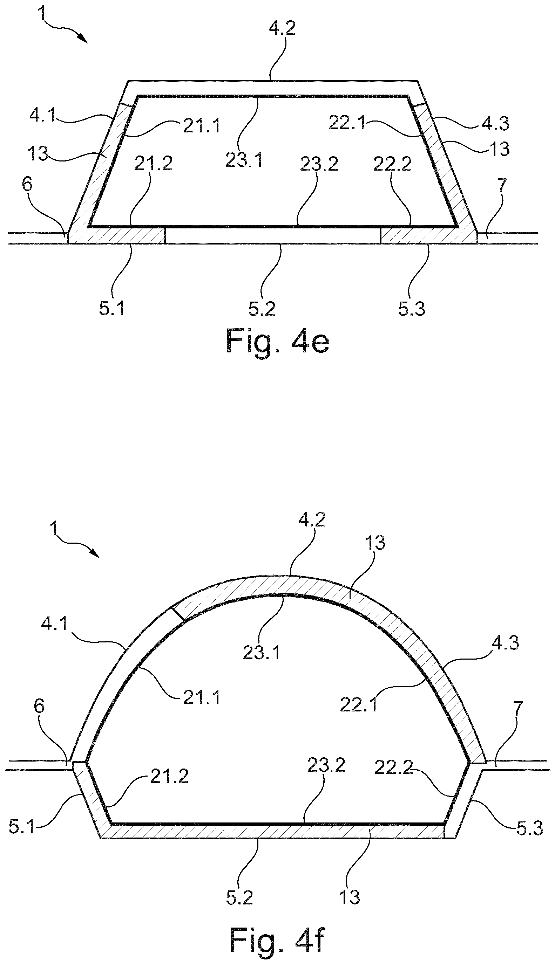

In Fig. 4e ist eine erfindungsgemäß Ausführungsform eines Systems 1 eines verstärkten Strukturelementes 12, 14 dargestellt. In diesem Ausführungsbeispiel sind die Bereiche 5.1, 5.2, 5.3 des zweiten Bleches 5 kontinuierlich ausgebildet, wobei die Bereiche 5.1, 5.2, 5.3 in einer gemeinsamen Ebene liegen. Dabei ist der erste Bereich 5.1 bei der ersten Fügestelle 6 angeordnet, der dritte Bereich 5.3 bei der zweiten Fügestelle 7 angeordnet, und der zweite Bereich 5.2 ist zwischen dem ersten Bereich 5.1 und dem dritten Bereich 5.3 angeordnet. Die Bereiche 4.1, 4.2, 4.3 des ersten Bleches 4 sind jedoch durch Biegungen im Blech 4 voneinander abgesetzt ausgebildet. Wiederum sind zwei Paare von sich gegenüberliegenden Bereichen 4.1, 4.3, 5.1, 5.3 der Bleche 4, 5 mittels Klebstoff 13 mit dem Verstärkungselement 20 verklebt. In diesem Ausführungsbeispiel ist eine kontinuierliche Klebstoffschicht 13 im Bereich der Fügestellen 6, 7 vorgesehen.

In Fig. 4f ist eine weitere beispielhafte Ausführungsform eines Systems 1 eines verstärkten Strukturelementes 12, 14 dargestellt. In diesem Ausführungsbeispiel sind die Bereiche 4.1, 4.2, 4.3 des ersten Bleches 4 kontinuierlich ausgebildet. Dabei bildet das erste Blech 4 einen bogenförmigen Querschnitt, und die Bereiche 4.1, 4.2, 4.3 bestehen aus Abschnitten dieses bogenförmigen Querschnitts des ersten Bleches 4. Der erste Bereich 4.1 ist dabei bei der ersten Fügestelle 6 angeordnet, der dritte Bereich 4.3 ist bei der zweiten Fügestelle 7 angeordnet, und der zweite Bereich 4.2 ist zwischen dem ersten Bereich 4.1 und dem dritten Bereich 4.3 angeordnet.

Wiederum sind zwei Paare von sich gegenüberliegenden Bereichen 4.2, 4.3, 5.1, 5.2 der Bleche 4, 5 mittels Klebstoff 13 mit dem Verstärkungselement 20 verklebt.

### Bezugszeichenliste

- 1: System
- 3: Hohlraum
- 4: erstes Blech
- 4.1: erster Bereich des ersten Bleches
- 4.2: zweiter Bereich des ersten Bleches
- 4.3: dritter Bereich des ersten Bleches
- 5: zweites Blech
- 5.1: erster Bereich des zweiten Bleches
- 5.2: zweiter Bereich des zweiten Bleches
- 5.3: dritter Bereich des zweiten Bleches
- 6: erste Fügestelle
- 7: zweite Fügestelle
- 10: Karosserie
- 12: Strukturelement
- 13: Klebstoff
- 14: Strukturelement
- 16: Vorrichtung
- 20: Verstärkungselement
- 21: erste Seitenwand
- 21.1: erste Teilwand der ersten Seitenwand
- 21.2: zweite Teilwand der ersten Seitenwand
- 22: zweite Seitenwand
- 22.1: erste Teilwand der zweiten Seitenwand
- 22.2: zweite Teilwand der zweiten Seitenwand
- 23: Verbindungswand
- 23.1: erste Teilwand der Verbindungswand
- 23.2: zweite Teilwand der Verbindungswand
- 24: Vorder-/Rückwand
- 26: Längsachse

## Patentansprüche

1. System (1) eines verstärkten Strukturelementes (12, 14) eines Kraftfahrzeuges, das System (1) umfassend:
ein Strukturelement (12, 14), welches ein erstes Blech (4) und ein zweites Blech (5) umfasst, wobei die Bleche (4, 5) an einer ersten Fügestelle (6) und an einer zweiten Fügestelle (7) miteinander verbunden sind, und wobei die Bleche (4, 5) im Bereich zwischen der ersten Fügestelle (6) und der zweiten Fügestelle (7) einen länglichen Hohlraum (3) bilden, und wobei die Bleche (4, 5) jeweils zwischen den Fügestellen (6, 7) einen ersten Bereich (4.1, 5.1), einen zweiten Bereich (4.2, 5.2) und einen dritten Bereich (4.3, 5.3) bilden;
ein Verstärkungselement (20), welches eine erste Seitenwand (21), eine zweite Seitenwand (22) und eine die Seitenwände (21, 22) verbindende Verbindungswand (23) umfasst, und welches im Hohlraum (3) des Strukturelementes (12, 14) angeordnet ist; und
Klebstoff (8), welcher das Verstärkungselement (20) mit dem Strukturelement (2) verklebt;
**dadurch gekennzeichnet, dass** das Verstärkungselement mit einem ersten Paar von sich gegenüberliegenden Bereichen (4.1, 4.2, 4.3, 5.1, 5.2, 5.3) der Bleche (4, 5) und mit einem zweiten Paar von sich gegenüberliegenden Bereichen (4.1, 4.2, 4.3, 5.1, 5.2, 5.3) der Bleche (4, 5) verklebt ist, und dass die Verbindungswand (23) eine erste Teilwand (23.1) und eine zweite Teilwand (23.2) umfasst, wobei die erste Teilwand (23.1) und die zweite Teilwand (23.2) jeweils die erste Seitenwand (21) und die zweite Seitenwand (22) miteinander verbinden, wobei die erste Seitenwand (21) im Bereich der ersten Fügestelle (6) durch eine kontinuierliche Schicht von Klebstoff (8) mit dem ersten Blech (4) und mit dem zweiten Blech (5) verklebt ist, und wobei die zweite Seitenwand (22) im Bereich der zweiten Fügestelle (7) durch eine kontinuierliche Schicht von Klebstoff (8) mit dem ersten Blech (4) und dem zweiten Blech (5) verklebt ist.

2. System (1) nach Anspruch 1, wobei der erste Bereich (4.1) des ersten Bleches (4) mit dem dritten Bereich (5.3) des zweiten Bleches (5) ein Paar sich gegenüberliegender Bereiche bildet, und wobei der zweite Bereich (4.2) des ersten Bleches (4) mit dem zweiten Bereich (5.2) des zweiten Bleches (5) ein Paar sich gegenüberliegender Bereiche bildet, und wobei der dritte Bereich (4.3) des ersten Bleches (4) mit dem ersten Bereich (5.1) des zweiten Bleches (5) ein Paar sich gegenüberliegender Bereiche bildet.

3. System (1) nach Anspruch 2, wobei die erste Seitenwand (21) eine erste Teilwand (21.1) und eine zweite Teilwand (21.2) umfasst, und wobei die zweite Seitenwand (22) eine erste Teilwand (22.1) und eine zweite Teilwand (22.2) umfasst, wobei die erste Teilwand (21.1, 22.1) und die zweite Teilwand (21.2, 22.2) einer Seitenwand (21, 22) jeweils im Wesentlichen in unterschiedlichen Ebenen angeordnet sind.

4. System (1) nach Anspruch 3, wobei die erste Seitenwand (21) an einer der Teilwände (21.1, 21.2) mit dem ersten Blech (4) verklebt ist und an einer der Teilwände (21.1, 21.2) mit dem zweiten Blech (5) verklebt ist, und wobei die zweite Seitenwand (22) an einer der Teilwände (22.1, 22.2) mit dem ersten Blech (4) verklebt ist und an einer der Teilwände (22.1, 22.2) mit dem zweiten Blech (5) verklebt ist.

5. System (1) nach einem der vorhergehenden Ansprüche, wobei die Verbindungswand (23) die erste Seitenwand (21) und die zweite Seitenwand (22) derart miteinander verbindet, dass die Verbindungswand (23) im Wesentlichen diagonal im Strukturelement (12, 14) angeordnet ist.

6. System (1) nach Anspruch 1, wobei die erste Seitenwand (21) an einer der Teilwände (21.1, 21.2) mit dem ersten Blech (4) verklebt ist oder an einer der Teilwände (21.1, 21.2) mit dem zweiten Blech (5) verklebt ist, und wobei die zweite Seitenwand (22) an einer der Teilwände (22.1, 22.2) mit dem ersten Blech (4) verklebt ist oder an einer der Teilwände (22.1, 22.2) mit dem zweiten Blech (5) verklebt ist, und wobei die erste Teilwand (23.1) der Verbindungswand (23) mit dem ersten Blech (4) verklebt ist, und wobei die zweite Teilwand (23.2) der Verbindungswand (23) mit dem zweiten Blech (5) verklebt ist.

7. System (1) nach einem der vorhergehenden Ansprüche, wobei das Verstärkungselement mit einem dritten Paar von sich gegenüberliegenden Bereichen (4.1, 4.2, 4.3, 5.1, 5.2, 5.3) der Bleche (4, 5) verklebt ist.

8. System (1) nach einem der vorhergehenden Ansprüche, wobei das Verstärkungselement (20) zumindest teilweise aus faserverstärktem Kunststoff oder aus Kunststoff oder aus Aluminium oder aus Magnesium aufgebaut ist.

9. System (1) nach einem der vorhergehenden Ansprüche, wobei alle Wände (21, 22, 23, 24) des Verstärkungselementes aus demselben Material gebildet sind.

10. System (1) nach einem der vorhergehenden Ansprüche, wobei der Klebstoff (8) ein nicht expandierbarer Klebstoff oder ein Klebstoff mit einer Expansionsrate von weniger als 500% ist.

11. System (1) nach einem der vorhergehenden Ansprüche, wobei der Klebstoff (8) ein Klebebandklebstoff, ein Formgedächtnisklebstoff, ein einspritzbarer Klebstoff, ein spritzgegossener Klebstoff oder ein aufextrudierter Klebstoff ist.

12. System (1) nach einem der vorhergehenden Ansprüche, wobei der Klebstoff (8) eine Schichtdicke von 0,3 bis 7 mm hat.

13. System (1) nach einem der vorhergehenden Ansprüche, wobei das Verstärkungselement (11) Rippen umfasst, welche im Wesentlichen orthogonal zu einer Längsachse (26) des Verstärkungselementes (11) orientiert sind und welche die erste Seitenwand (21) und die zweite Seitenwand (22) miteinander verbinden.

14. System (1) nach einem der vorhergehenden Ansprüche, wobei die erste Seitenwand (21) im Bereich der ersten Fügestelle (6) durch eine kontinuierliche Schicht von Klebstoff (13) mit dem ersten Blech (4) und dem zweiten Blech (5) verklebt ist, und/oder
wobei die zweite Seitenwand (22) im Bereich der zweiten Fügestelle (7) durch eine kontinuierliche Schicht von Klebstoff (13) mit dem ersten Blech (4) und dem zweiten Blech (5) verklebt ist.

## Claims

1. System (1) of a reinforced structural element (12, 14) of a motor vehicle, the system (1) comprising:
a structural element (12, 14) which comprises a first panel sheet (4) and a second panel sheet (5), wherein the panel sheets (4, 5) are interconnected at a first joint (6) and at a second joint (7), and wherein the panel sheets (4, 5) form an elongate cavity (3) in the region between the first joint (6) and the second joint (7), and wherein the panel sheets (4, 5) form a first region (4.1, 5.1), a second region (4.2, 5.2) and a third region (4.3, 5.3) in each case between the joints (6, 7);
a reinforcing element (20) which comprises a first side wall (21), a second side wall (22), and a connecting wall (23) connecting the side walls (21, 22), and which is disposed in the cavity (3) of the structural element (12, 14); and
adhesive (8) which adhesively bonds the reinforcing element (20) to the structural element (2);
**characterized in that** the reinforcing element is adhesively bonded to a first pair of mutually opposite regions (4.1, 4.2, 4.3, 5.1, 5.2, 5.3) of the panel sheets (4, 5), and to a second pair of mutually opposite regions (4.1, 4.2, 4.3, 5.1, 5.2, 5.3) of the panel sheets (4, 5), and **in that** the connecting wall (23) comprises a first part-wall (23.1) and a second part-wall (23.2), wherein the first part-wall (23.1) and the second part-wall (23.2) interconnect in each case the first side wall (21) and the second side wall (22), wherein the first side wall (21) in the region of the first joint (6) is adhesively bonded to the first panel sheet (4) and to the second panel sheet (5) by way of the continuous layer of adhesive (8), and wherein the second side wall (22) in the region of the second joint (7) is adhesively bonded to the first panel sheet (4) and to the second panel sheet (5) by way of a continuous layer of adhesive (8).

2. System (1) according to Claim 1, wherein the first region (4.1) of the first panel sheet (4) conjointly with the third region (5.3) of the second panel sheet (5) forms a pair of mutually opposite regions, and wherein the second region (4.2) of the first panel sheet (4) conjointly with the second region (5.2) of the second panel sheet (5) forms a pair of mutually opposite regions, and wherein the third region (4.3) of the first panel sheet (4) conjointly with the first region (5.1) of the second panel sheet (5) forms a pair of mutually opposite regions.

3. System (1) according to Claim 2, wherein the first side wall (21) comprises a first part-wall (21.1) and a second part-wall (21.2), and wherein the second side wall (22) comprises a first part-wall (22.1) and a second part-wall (22.2), wherein the first part-wall (21.1, 22.1) and the second part-wall (21.2, 22.2) of one side wall (21, 22) are in each case disposed substantially in different planes.

4. System (1) according to Claim 3, wherein the first side wall (21) on one of the part-walls (21.1, 21.2) is adhesively bonded to the first panel sheet (4) and on one of the part-walls (21.1, 21.2) is adhesively bonded to the second panel sheet (5), and wherein the second side wall (22) on one of the part-walls (22.1, 22.2) is adhesively bonded to the first panel sheet (4) and on one of the part-walls (22.1, 22.2) is adhesively bonded to the second panel sheet (5).

5. System (1) according to one of the preceding claims, wherein the connecting wall (23) interconnects the first side wall (21) and the second side wall (22) in such a manner that the connecting wall (23) is disposed so as to be substantially diaconal in the structural element (12, 14).

6. System (1) according to Claim 1, wherein the first side wall (21) on one of the part-walls (21.1, 21.2) is adhesively bonded to the first panel sheet (4) or on one of the part-walls (21.1, 21.2) is adhesively bonded to the second panel sheet (5), and wherein the second side wall (22) on one of the part-walls (22.1, 22.2) is adhesively bonded to the first panel sheet (4) or on one of the part-walls (22.1, 22.2) is adhesively bonded to the second panel sheet (5), and wherein the first part-wall (23.1) of the connecting wall (23) is adhesively bonded to the first panel sheet (4), and wherein the second part-wall (23.2) of the connecting wall (23) is adhesively bonded to the second panel sheet (5).

7. System (1) according to one of the preceding claims, wherein the reinforcing element is adhesively bonded to a third pair of mutually opposite regions (4.1, 4.2, 4.3, 5.1, 5.2, 5.3) of the panel sheets (4, 5).

8. System (1) according to one of the preceding claims, wherein the reinforcing element (20) is at least partially constructed from fibre-reinforced plastics of from plastics or from aluminium or from magnesium.

9. System (1) according to one of the preceding claims, wherein all walls (21, 22, 23, 24) of the reinforcing element are formed from the same material.

10. System (1) according to one of the preceding claims, wherein the adhesive (8) is a non-expandable adhesive or an adhesive having an expansion rate of less than 500%.

11. System (1) according to one of the preceding claims, wherein the adhesive (8) is a tape adhesive, shape memory adhesive, and injectable adhesive, an injection-moulded adhesive or an extruded adhesive.

12. System (1) according to one of the preceding claims, wherein the adhesive (8) has a layer thickness of 0.3 to 7 mm.

13. System (1) according to one of the preceding claims, wherein the reinforcing element (11) comprises ribs which are oriented so as to be substantially orthogonal to a longitudinal axis (26) of the reinforcing element (11), and which interconnects the first side wall (21) and the second side wall (22).

14. System (1) according to one of the preceding claims, wherein the first side wall (21) in the region of the first joint (6) is adhesively bonded to the first panel sheet (4) and to the second panel sheet (5) by way of a continuous layer of adhesive (13), and/or
wherein the second side wall (22) in the region of the second joint (7) is adhesively bonded to the first panel sheet (4) and to the second panel sheet (5) by way of continuous layer of adhesive (13).

## Revendications

1. Système (1) d'un élément structural renforcé (12, 14) d'un véhicule automobile, le système (1) comprenant :
un élément structural (12, 14), qui comprend une première tôle (4) et une deuxième tôle (5), les tôles (4, 5) étant reliées entre elles au niveau d'un premier emplacement d'assemblage (6) et au niveau d'un deuxième emplacement d'assemblage (7), et les tôles (4, 5) formant une cavité allongée (3) dans la zone entre le premier emplacement d'assemblage (6) et le deuxième emplacement d'assemblage (7), et les tôles (4, 5) comprenant chacune entre les emplacements d'assemblage (6, 7) une première zone (4.1, 5.1), une deuxième zone (4.2, 5.2) et une troisième zone (4.3, 5.3) ;
un élément de renforcement (20), qui comprend une première paroi latérale (21), une deuxième paroi latérale (22) et une paroi de liaison (23) reliant les parois latérales (21, 22), et qui est agencé dans la cavité (3) de l'élément structural (12, 14) ; et
un adhésif (8), qui colle l'élément de renforcement (20) à l'élément structural (2) ;
**caractérisé en ce que** l'élément de renforcement est collé à une première paire de zones opposées (4.1, 4.2, 4.3, 5.1, 5.2, 5.3) des tôles (4, 5) et à une deuxième paire de zones opposées (4.1, 4.2, 4.3, 5.1, 5.2, 5.3) des tôles (4, 5), et **en ce que** la paroi de liaison (23) comprend une première paroi partielle (23.1) et une deuxième paroi partielle (23.2), la première paroi partielle (23.1) et la deuxième paroi partielle (23.2) reliant respectivement la première paroi latérale (21) et la deuxième paroi latérale (22) l'une à l'autre, la première paroi latérale (21) étant collée à la première tôle (4) et à la deuxième tôle (5) dans la zone du premier emplacement d'assemblage (6) par une couche continue d'adhésif (8), et la deuxième paroi latérale (22) étant collée à la première tôle (4) et à la deuxième tôle (5) dans la zone du deuxième emplacement d'assemblage (7) par une couche continue d'adhésif (8).

2. Système (1) selon la revendication 1, dans lequel la première zone (4.1) de la première tôle (4) forme avec la troisième zone (5.3) de la deuxième tôle (5) une paire de zones opposées, et dans lequel la deuxième zone (4.2) de la première tôle (4) forme avec la deuxième zone (5.2) de la deuxième tôle (5) une paire de zones opposées, et dans lequel la troisième zone (4.3) de la première tôle (4) forme avec la première zone (5.1) de la deuxième tôle (5) une paire de zones opposées.

3. Système (1) selon la revendication 2, dans lequel la première paroi latérale (21) comprend une première paroi partielle (21.1) et une deuxième paroi partielle (21.2), et dans lequel la deuxième paroi latérale (22) comprend une première paroi partielle (22.1) et une deuxième paroi partielle (22.2), dans lequel la première paroi partielle (21.1, 22.1) et la deuxième paroi partielle (21.2, 22.2) d'une paroi latérale (21, 22) sont chacune agencées essentiellement dans des plans différents.

4. Système (1) selon la revendication 3, dans lequel la première paroi latérale (21) est collée à la première tôle (4) sur une des parois partielles (21.1, 21.2) et est collée à la deuxième tôle (5) sur une des parois partielles (21.1, 21.2), et dans lequel la deuxième paroi latérale (22) est collée à la première tôle (4) sur une des parois partielles (22.1, 22.2) et est collée à la deuxième tôle (5) sur une des parois partielles (22.1, 22.2).

5. Système (1) selon l'une quelconque des revendications précédentes, dans lequel la paroi de liaison (23) relie la première paroi latérale (21) et la deuxième paroi latérale (22) l'une à l'autre de telle sorte que la paroi de liaison (23) est agencée essentiellement en diagonale dans l'élément structural (12, 14).

6. Système (1) selon la revendication 1, dans lequel la première paroi latérale (21) est collée à la première tôle (4) sur une des parois partielles (21.1, 21.2) ou est collée à la deuxième tôle (5) sur une des parois partielles (21.1, 21.2), et dans lequel la deuxième paroi latérale (22) est collée à la première tôle (4) sur une des parois partielles (22.1, 22.2) ou est collée à la deuxième tôle (5) sur une des parois partielles (22.1, 22.2), et dans lequel la première paroi partielle (23.1) de la paroi de liaison (23) est collée à la première tôle (4), et dans lequel la deuxième paroi partielle (23.2) de la paroi de liaison (23) est collée à la deuxième tôle (5).

7. Système (1) selon l'une quelconque des revendications précédentes, dans lequel l'élément de renforcement est collé à une troisième paire de zones opposées (4.1, 4.2, 4.3, 5.1, 5.2, 5.3) des tôles (4, 5) .

8. Système (1) selon l'une quelconque des revendications précédentes, dans lequel l'élément de renforcement (20) est construit au moins partiellement à partir de matière plastique renforcée par des fibres ou à partir de matière plastique ou à partir d'aluminium ou à partir de magnésium.

9. Système (1) selon l'une quelconque des revendications précédentes, dans lequel toutes les parois (21, 22, 23, 24) de l'élément de renforcement sont formées à partir du même matériau.

10. Système (1) selon l'une quelconque des revendications précédentes, dans lequel l'adhésif (8) est un adhésif non expansible ou un adhésif ayant un taux d'expansion inférieur à 500 %.

11. Système (1) selon l'une quelconque des revendications précédentes, dans lequel l'adhésif (8) est un adhésif en bande adhésive, un adhésif à mémoire de forme, un adhésif injectable, un adhésif moulé par injection ou un adhésif extrudé.

12. Système (1) selon l'une quelconque des revendications précédentes, dans lequel l'adhésif (8) a une épaisseur de couche de 0,3 à 7 mm.

13. Système (1) selon l'une quelconque des revendications précédentes, dans lequel l'élément de renforcement (11) comprend des nervures, qui sont orientées essentiellement orthogonalement à un axe longitudinal (26) de l'élément de renforcement (11) et qui relient la première paroi latérale (21) et la deuxième paroi latérale (22) l'une à l'autre.

14. Système (1) selon l'une quelconque des revendications précédentes, dans lequel la première paroi latérale (21) est collée à la première tôle (4) et à la deuxième tôle (5) dans la zone du premier emplacement d'assemblage (6) par une couche continue d'adhésif (13), et/ou
dans lequel la deuxième paroi latérale (22) est collée à la première tôle (4) et à la deuxième tôle (5) dans la zone du deuxième emplacement d'assemblage (7) par une couche continue d'adhésif (13).
